# EUROPEAN PATENT SPECIFICATION

(11) **EP 1 717 425 B1**
(45) Date of publication and mention of the grant of the patent: **24.07.2013**
(21) Application number: 06008949.7
(22) Date of filing: 28.04.2006
(51) Int. Cl.: F02B 75/22

(54) **Internal combustion engine**
Brennkraftmaschine
Moteur à combustion interne

(30) Priority: 28.04.2005 JP 2005132807
(43) Date of publication of application: 02.11.2006
(73) Proprietor: Yamaha Hatsudoki Kabushiki Kaisha, Shizuoka-ken Shizuoka 438-8501 (JP)
(72) Inventor: Okamoto, Yasuo, Iwata-shi Shizuoka-ken 438-8501 (JP)
(74) Representative: Grünecker, Kinkeldey, Stockmair & Schwanhäusser

(56) References cited:
- EP-A2- 0 715 059
- DE-A1- 3 907 039
- GB-A- 2 316 446
- US-A1- 2003 041 824

## Description

The present invention relates to an internal combustion engine having bank portions arranged in a V-shaped configuration according to the preamble of independent claim 1. Such a device is known from EP 0 715 059.

Conventional examples of an internal combustion engine of this type include one described in, for example, JP-A-2003-286854. That is, in a V-engine described in JP-A-2003-286854, a valve camshaft of one of the bank portions is driven by a crankshaft via an endless timing drive belt, and a gear shaft brought into meshing engagement with the crankshaft to be driven in reverse is provided. Through the drive of this gear shaft, a valve camshaft of the other bank portion is rotated in the direction opposite to the rotation direction of the valve camshaft of the one bank portion via an endless timing drive belt.

Further, the tension applied to the endless timing drive belts of the respective bank portions is adjusted by hydraulic tensioners. The hydraulic tensioners are both provided on the inner sides of the V-shaped bank portions or on the outer sides of the V-shaped bank portions.

With the conventional structure as described above, however, in order to drive the valve camshaft of one of the bank portions, the endless timing drive belt is directly wound around the crankshaft. Expansion or wear thus occurs in the endless timing drive belt due to the influence of variations in crank angle speed, which may cause a deterioration in reliability and durability.

Further, since the endless timing drive belt is to be wound around the drive wheel on the crankshaft side and the driven wheel on the valve camshaft side, when transmitting the drive force from the drive wheel to the driven wheel, the speed of the drive wheel must be decelerated to a predetermined speed. Further, due to requirements in terms of the durability, bending loss, and the like of the endless timing drive belt wound on the driven wheel side, the diameter of the driven wheel cannot be reduced in an arbitrary manner, which makes it difficult to achieve miniaturization of the cylinder head.

In view of the above, it is an object of the present invention to provide an internal combustion engine that allows an improvement in the reliability and durability of endless timing drive belts by reducing the influence of variations in crank angle speed while driving the endless timing drive belts of respective bank portions in opposite directions.

It is another object of the present invention to achieve miniaturization of a cylinder head.

This objective is solved in an inventive manner by an internal combustion engine having first and second cylinder banks in a V-shaped configuration and a valve-drive mechanism comprising a first idle shaft driven by the crankshaft for driving a valve camshaft of the first cylinder bank and a second idle shaft driven by the first idle shaft for driving a valve camshaft of the second cylinder bank, wherein a plurality of cylinders are arranged in the V-shaped configuration by the first cylinder bank and the second cylinder bank, and wherein the first idle shaft is a shaft for driving the valve camshaft of the first bank via a first endless timing drive belt or chain, and the second idle shaft is a shaft for driving the valve camshaft of the second bank via a second endless timing drive belt or chain.

Further, preferable the crankshaft has a crank gear for driving the first idle shaft, the first idle shaft has an idle gear driven by the crank gear, and a drive wheel for driving the valve camshaft of the first cylinder bank portion, the idle gear and the drive wheel of the first idle gear being arranged coaxial with each other, wherein the second idle shaft has an idle gear driven by the idle gear of the first idle shaft, and a drive wheel for driving the valve camshaft of the second cylinder bank, the idle gear and the drive wheel of the seconde idle gear being arranged coaxial with each other, and wherein a gear ratio between the crank gear, the idle gear of the first idle gear, and the idle gear of the second idle gear is set so that the first idle shaft and the second idle shaft decelerate relative to the crankshaft.

Therein, it is beneficial if the idle gear of the first idle shaft and the idle gear of the second idle shaft have the same number of teeth, and a gear ratio of the crank gear to the idle gear of the first idle shaft is one of 1:2, 2:3, 3:4, 4:5, and 5:8.

Still further, preferably a center distance between the first idle shaft and the valve camshaft of the first cylinder bank is set smaller than a center distance between the crankshaft and the valve camshaft of the first cylinder bank, and a center distance between the second idle shaft and the valve camshaft of the second cylinder bank is set smaller than a center distance between the crankshaft and the valve camshaft of the second cylinder bank.

Yet further, preferably the idle gear of the second idle shaft drives a balancer gear of a primary balancer shaft.

According to another embodiment, a sum of a winding radius of the first endless timing drive belt on the first idle shaft and a winding radius of the second endless timing drive belt on the second idle shaft is smaller than a center distance between the first idle gear and the second idle gear.

According to yet another embodiment, the internal combustion engine further comprises a tensioner arranged on an outer or inner side of each of the first and second cylinder banks, for adjusting a tension applied to each of the first and second endless timing drive belts.

According to still another embodiment, the valve camshafts of the first and second cylinder banks each include a pair of intake and exhaust valve camshafts, valve gears that mesh with each other are provided to both of the intake and exhaust valve camshafts, and each of the first and second endless timing drive belts is wound around one of the intake and exhaust valve camshafts arranged on the outer or inner side of each of the first and second cylinder banks.

In the following, the present invention is explained in greater detail with respect to several embodiments thereof in conjunction with the accompanying drawings, wherein:
- FIG. 1: is a main-portion sectional view showing a V-engine according to Embodiment 1,
- FIG. 2: is a main-portion sectional view showing a V-engine according to Embodiment 2,
- FIG. 3: is a side view showing a rocker arm and the like according to Embodiment 2,
- FIG. 4: is a main-portion sectional view showing a V-engine according to Embodiment 3, and
- FIG. 5: is a main-portion sectional view showing a V-engine according to Embodiment 4.

### Description of Reference Numerals and Symbols:

- 11:: V-engine (internal combustion engine),
- 12:: crankshaft,
- 12a:: crank gear,
- 13:: first bank portion,
- 14:: second bank portion,
- 17, 18:: first valve camshaft,
- 17a, 18a:: first driven sprocket,
- 17b, 18b:: first valve gear,
- 19, 20:: second valve gear,
- 19a, 20a:: second driven sprocket,
- 19b, 20b:: second valve gear,
- 23:: first idle shaft,
- 23a:: first idle gear,
- 23b:: first driven sprocket (first drive wheel),
- 24:: second idle shaft,
- 24a:: second idle gear,
- 24b:: second drive sprocket (second drive wheel),
- 27:: first timing drive chain (first endless timing drive belt),
- 28:: second timing drive chain (second endless timing drive belt),
- 31:: first guide portion,
- 32:: second guide portion,
- 35:: first tensioner,
- 36:: second tensioner,
- 39:: first balancer shaft, and
- 39a:: balancer gear.

Hereafter, embodiments will be described.

### [Embodiment 1]

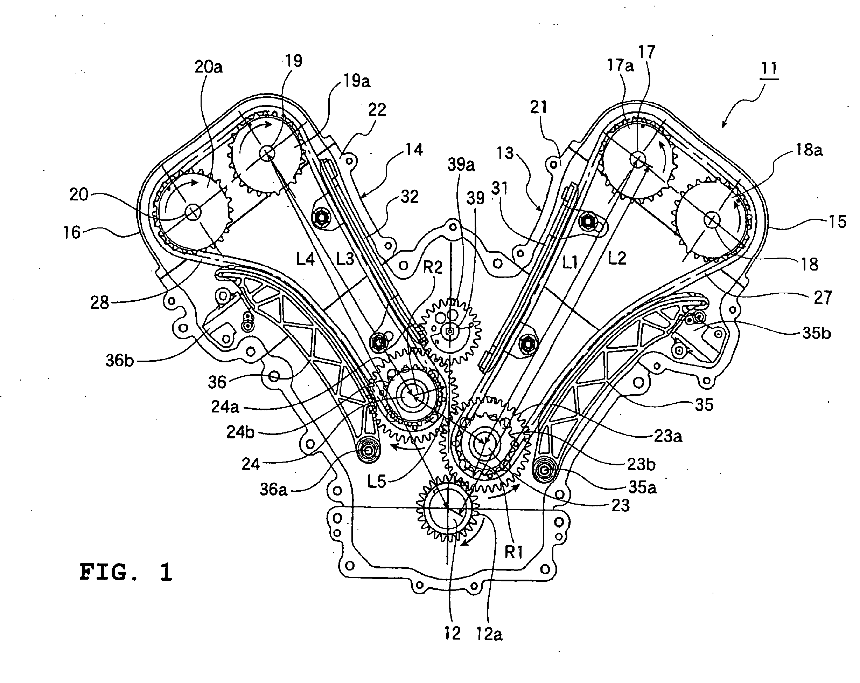

### Fig. 1 shows Embodiment 1.

First, the construction will be described. In Fig. 1, a reference numeral 11 denotes a V-engine as an "internal combustion engine". In the internal combustion engine 11, a pair of first and second bank portions 13 and 14 are provided on the right and left sides with respect to a crankshaft 12 provided in a lower portion of the V-engine 11.

In the first bank portion 13, first valve camshafts 17 and 18 having formed therein cams for driving intake and exhaust valves (not shown) are rotatably arranged in the upper portion of the first bank portion 13. Further, in the second bank portion 14, second valve camshafts 19 and 20 having formed therein cams for driving intake and exhaust valves (not shown) are rotatably arranged in the upper portion of the second bank portion 14. Of the valve camshafts 17, 18, 19, and 20, the valve camshafts 17 and 19 are on the intake side, and the valve shafts 18 and 20 are on the exhaust side.

Further, the valve camshafts 17, 18, 19, and 20 are each adapted to be rotated while being decelerated by the drive force of the crankshaft 12.

Specifically, there are provided a first idle shaft 23 driven by the crankshaft 12, and a second idle shaft 24 driven by the first idle shaft 23. The first idle shaft 23 is a shaft for driving the first valve camshafts 17 and 18 of the first bank portion 13 via a first timing drive chain 27 serving as a "first endless timing drive belt", and the second idle shaft 24 is a shaft for driving the second valve camshafts 19 and 20 of the second bank portion 14 via a second timing drive chain 28 serving as a "second endless timing drive belt".

The crankshaft 12 is provided with a crank gear 12a for driving the first idle shaft 23. The first idle gear 23 is provided with a first idle gear 23a that is driven by the crank gear 12a.

Further, a first drive sprocket 23b as a "first drive wheel" for driving the first valve camshafts 17 and 18 is provided to the first idle shaft 23 so as to be coaxial with the first idle gear 23a.

Further, a second idle gear 24a that is driven by the first idle gear 23a, and a second sprocket 24b as a "second drive wheel" for driving the second valve camshafts 19 and 20 are provided to the second idle shaft 24 so as to be coaxial with each other.

The gear ratio between the crank gear 12a and the first idle gear 23a or the second idle gear 24a is set so that the first idle gear 23 and second idle gear 24 decelerate relative to the crankshaft 12.

More specifically, the first idle gear 23a and the second idle gear 24a have the same number of teeth, and the gear ratio of the crank gear 12a to the first idle gear 23a is set to one of 1:2, 2:3, 3:4, 4:5, and 5:8.

Further, the first timing drive chain 27 is wound around the first drive sprocket 23b and first driven sprockets 17a and 18a respectively provided at end portions of the first valve camshafts 17 and 18, and the second timing drive chain 28 is wound around the second drive sprocket 24b and second driven sprockets 19a and 20a respectively provided at end portions of the second valve camshafts 19 and 20.

The center distance L1 between the first idle shaft 23 and the first valve camshaft 17 is set shorter than the center distance L2 between the crankshaft 12 and the first valve camshaft 17. Further, the center distance L3 between the second idle shaft 24 and the second valve camshaft 19 is set shorter than the center distance L4 between the crankshaft 12 and the second valve camshaft 19. Furthermore, the center distance L1 is set larger than the center distance L3, and the center distance L2 and the center distance L4 are set equal to each other.

Further, the sum of the winding radius R1 of the first timing drive chain 27 on the first idle shaft 23 and the winding radius R2 of the second timing drive chain 28 on the second idle shaft 24 is set to be smaller than the center distance L5 between the first idle gear 23a and the second idle gear 24a.

Further, a first guide portion 31 and a second guide portion 32 for guiding the timing drive chains 27 and 28 are provided on the inner sides of the bank portions 13 and 14, respectively. Further, a first tensioner 35 and a second tensioner 36 are arranged on the outer sides of the bank portions 13 and 14, respectively.

The lower sides (proximal sides) of the tensioners 35 and 36 are arranged so as to be rotatable by shafts 35a and 36a, and urging devices 35b and 36b are arranged on the upper sides (distal side) thereof. The upper end portions of the tensioners 35 and 36 are urged toward the timing drive chains 27 and 28 by the urging devices 35b and 36b, respectively. A predetermined tension is thus applied to each of the timing drive chains 27 and 28 at all times.

Further, a balancer gear 39a of a primary balancer shaft 39 is in meshing engagement with the second idle gear 24a of the second idle shaft 24 and is driven by the second idle gear 24a.

Next, operation will be described.

When the V-engine 11 is driven and the crankshaft 12 is rotated, the first idle shaft 23 is rotated via the crank gear 12a and the first idle gear 23a. Simultaneously with this, the second idle shaft 24 is rotated via the first idle gear 23a and the second idle gear 24a.

At this time, the first and second idle shafts 23 and 24 are rotated at reduced rotational speeds relative to the rotational speed of the crankshaft 12.

Accordingly, the first valve camshafts 17 and 18 and the second valve camshafts 19 and 20 are rotated via the two timing drive chains 27 and 28, respectively. The rotation of the camshafts 17, 18, 19, and 20 causes the intake and exhaust valves to be opened and close at a predetermined timing via the cams (not shown).

Further, at this time, flopping or the like is suppressed since the timing drive chains 27 and 28 are applied with the predetermined tension by the respective tensioners 35 and 36.

Further, due to the drive of the second idle hear 24a, the primary balancer shaft 39 is rotated in the opposite direction to the crankshaft 12 via the balancer gear 39a, whereby the balance at the time of driving of the V-engine 11 is maintained.

According to the above-described construction, the first and second timing drive chains 27 and 28 are not directly driven by the crankshaft 12 but are driven via the respective idle gears 23a and 24a. Accordingly, variations in crank angle speed are absorbed due to the intermeshing of the gears, whereby expansion or wear of the first and second timing drive chains 27 and 28 can be prevented to thereby achieve improved durability of the first and second timing drive chains 27 and 28.

Further, the rotations of the first sprocket 23b and second sprocket 24b are decelerated relative to the rotation speed of the crank gear 12a via the respective idle gears 23a and 24a, whereby the outer shapes of the respective driven sprockets 17a, 18a, 19a, and 20a can be made small. Accordingly, the spacing (cam-to-cam pitch) between the center of the first driven sprocket 17a and the center of the second driven sprocket 18a can be made small, whereby cylinder heads 21 and 22 and cylinder head covers 15 and 16 can be made compact.

Furthermore, in addition to a drop in the rotation speed of each of the drive sprockets 23b and 24b, the speed of each of the first and second timing drive chains 27 and 28 also decreases, whereby an improvement can be achieved in terms of durability.

Further, since the first idle gear 23a and the second idle gear 24a have the same number of teeth, and the gear ratio of the crank gear 12a to the-first idle gear 23a is set to one of 1:2, 2:3, 3:4, 4:5, and 5:8, the cam-to-cam pitch can be reduced without increasing the bending loss of the timing drive chains 27 and 28, thereby allowing miniaturization on the side of the cylinder heads 21 and 22.

Furthermore, since the center distance L1 between the first idle shaft 23 and the first valve camshaft 17 is set smaller than the center distance L2 between the second idle shaft 24 and the second valve camshaft 19, and the center distance L3 between the second idle shaft 24 and the second valve camshaft 29 is set smaller than the center distance L4 between the crankshaft 12 and the second valve camshaft 19, the overall length of each of the first and second timing drive chains 27 and 28 can be reduced. Accordingly, it is possible to prevent a decrease in performance due to expansion of the first and second timing drive chains 27 and 28, that is, a decrease in output due to a change in valve timing caused by the expansion of the chains 27 and 28, a variation in exhaust gas compatibility, a deterioration of starting characteristics, or the like.

Further, when the primary balancer shaft 39 is arranged, since the primary balancer shaft 39 must be rotated in reverse with respect to the crankshaft 12, it can be brought into meshing engagement with either of the crank gear 12a and the second idle gear 24a. Accordingly, the freedom of layout increases, and due to the adoption of the gear drive system, a phase shift can be made relatively small as compared with the case where a chain drive system is adopted. When the primary balancer shaft 39 is of a type penetrating a case, it is desirably arranged between the bank portion 13 and the bank portion 14.

Further, since the sum of the winding radius R1 of the first timing drive chain 27 on the first idle shaft 23 and the winding radius R2 of the second timing drive chain 28 on the second idle shaft 24 is smaller than the center distance L5 between the fist idle gear 23a and the second idle gear 24a, no interference occurs between the first and second timing drive chains 27 and 28 of the two bank portions 13 and 14. Accordingly, there is no need to provide an offset in the direction of the crankshaft 12, thereby allowing a reduction in length with respect to the direction of the crankshaft 12.

Further, in this embodiment, the first and second tensioners 35 and 36 are arranged on the outer sides of the first and second bank portions 13 and 14, respectively. Therefore, the space between the two tensioners can be secured even when the angle between the bank portions 13 and 14 of the V-engine is narrow.

### [Embodiment 2]

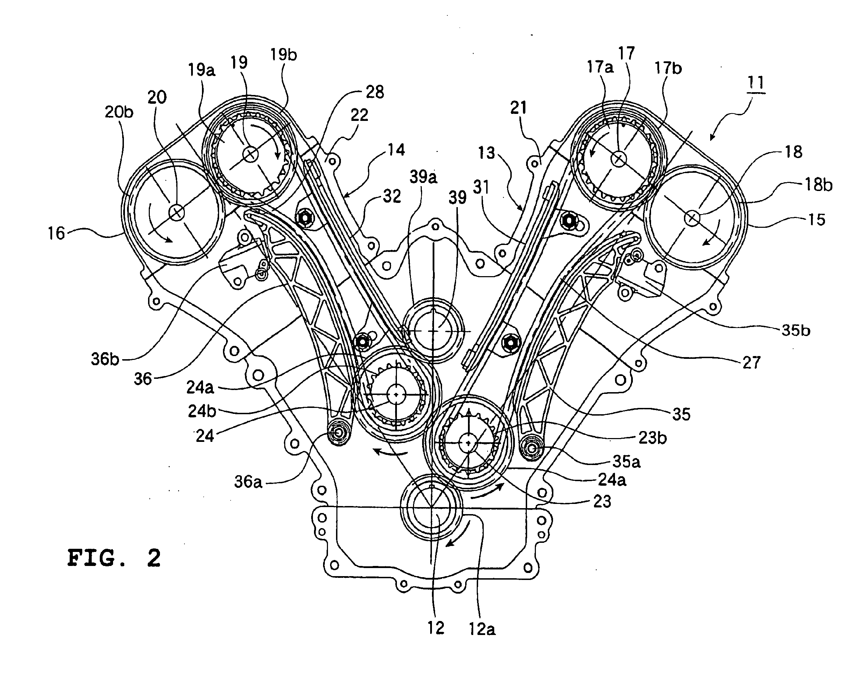

### Fig. 2 shows Embodiment 2.

The difference of Embodiment 2 from Embodiment 1. resides in the structure on the side of the valve camshafts 17, 18, 19, and 20.

That is, the first valve camshafts 17 and 18 are respectively provided with first valve gears 17b and 18b in meshing engagement with each other, and the second valve camshafts 19 and 20 are respectively provided with second valve gears 19b and 20b in meshing engagement with each other.

Further, the first timing drive chain 27 is wound around the first driven sprocket 17a of the first valve camshaft 17 on the inner side of the first bank portion 13, and the second timing drive chain 28 is wound around the second driven sprocket 19a of the second valve camshaft 19 on the inner side of the second bank portion 14.

According to the construction as described above, when the first and second idle shafts 23 and 24 are driven, the first valve camshaft 17 and the second valve camshaft 19 are rotated in the direction indicated by the arrows via the two timing drive chains 27 and 28, respectively. Then, on the first bank portion 13 side, the drive force of the first valve camshaft 17 is transmitted to the first valve camshaft 18 via the first valve gears 17b and 18b, causing the first valve camshaft 18 to rotate in the direction indicated by the arrow. Further, on the second bank portion 14 side, the drive force of the second valve camshaft 19 is transmitted to the second valve camshaft 20 via the second valve gears 19b and 20b, causing the second valve camshaft 20 to rotate in the direction indicated by the arrow.

In this embodiment, the tensioners 35 and 36 are arranged on the inner side than those of Embodiment 1, thereby making it possible to reduce the outer shape of the V-engine 11.

Further, as compared with the construction according to Embodiment 1, since the first timing drive chain 27 is wound around one of the first valve camshafts 17 and 18, and the second timing drive chain 28 is wound around one of the second valve camshafts 19 and 20, the valve camshafts 18 and 20, around which the timing drive chains 27 and 28 are not wound, are driven by the valve gears 17b and 18b, and 19b and 20b, respectively. The influence of the expansion of the timing drive chains 27 and 28 between the camshafts 17 and 18 and between the camshafts 19 and 20, respectively, is thus eliminated, whereby it is possible to prevent a decrease in performance due to the expansion of the first and second timing drive chains 27 and 28, that is, a decrease in output due to a change in valve timing caused by the expansion of the timing drive chains 27 and 28, a variation in exhaust gas compatibility, a deterioration of starting characteristics, or the like.

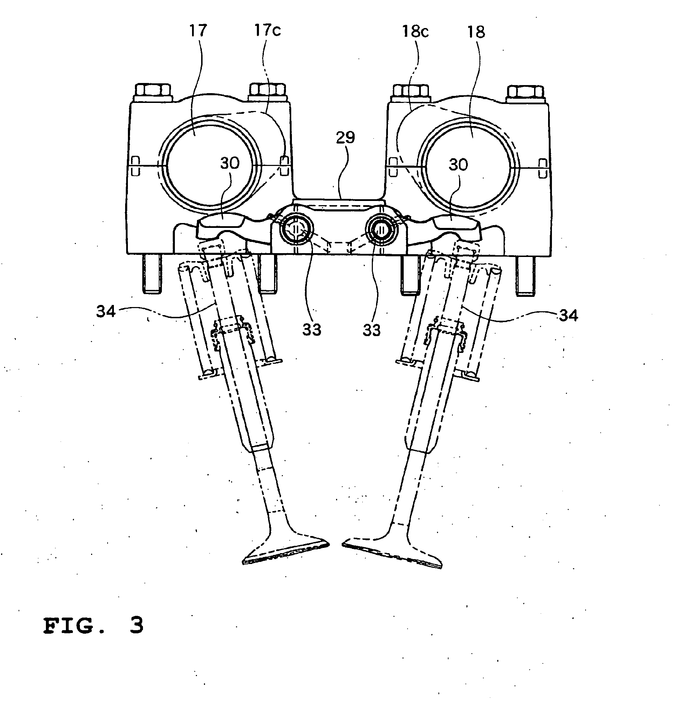

Further, in this case, on the rocker-arm contacting surface side (not shown) of each of the valve camshafts 17, 18, 19, and 20, all the cams formed in the respective valve camshafts 17, 18, 19, and 20 rotate from the outside to the inside with respect to the cylinder center. Accordingly, the fluctuating cam driving torque at high speed rotation in a rocker arm valve system of the inner pivot layout as shown in Fig. 3 can be made small, whereby an improvement can be achieved in terms of the reliability of both the timing drive chains 27 and 28. Specifically, the rocker arm valve system of the inner pivot layout refers to a system in which, as shown in Fig. 3, pivot shafts 33 for rotatably supporting rocker arms 30 on a cam carrier 29 are arranged on the inner sides of the valve camshafts 17 and 18. When the valve camshafts 17 and 18 are rotated, the rocker arms 30 are pushed by cams 17c and 18c to pivot, whereby on/off valves 34 are made movable to open and close intake and exhaust ports (not shown). At this time, since all the cams 17c and 18c formed in the respective valve camshafts 17 and 18 rotate in the direction from the outside to the inside with respect to the cylinder center, the fluctuating cam driving torque can be made small, and the reliability of the timing drive chain 27 can be enhanced.

It should be noted that since the same description applies to the other valve camshafts 19 and 20, repetitive description will be omitted.

Otherwise, Embodiment 2 is of the same construction and operation as Embodiment 1, so repetitive description will be omitted.

### [Embodiment 3]

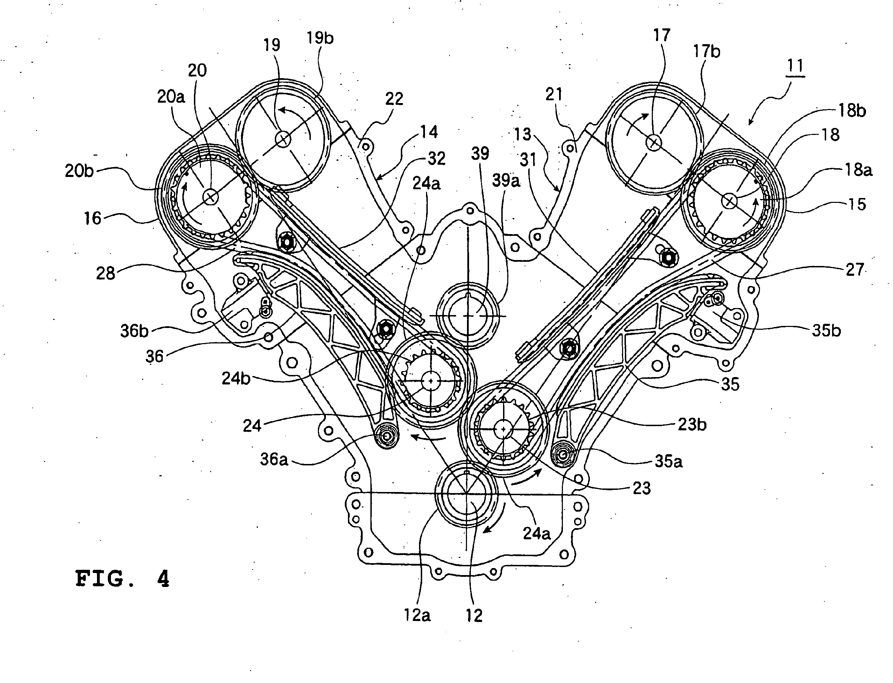

### Fig. 4 shows Embodiment 3.

As compared with Embodiment 2, Embodiment 3 differs from Embodiment 2 in the positions where the timing drive chains 27 and 28 are wound on the sides of the respective valve camshafts 17, 18, 19, and 20.

That is, the first timing drive chain 27 is wound around the first driven sprocket 18a of the first valve camshaft 18 arranged on the outer side of the V-bank, and the second timing drive chain 28 is wound around the second driven sprocket 20a of the second valve camshaft 20 arranged on the outer side of the V-bank.

Accordingly, the valve camshafts 17, 18, 19, and 20 are adapted to rotate in the direction opposite to that in Embodiment 2 by means of the respective timing drive chains 27 and 28 (see the arrows in Fig. 4).

Hence, the average cam driving torque at low speed rotation can be made small in the rocker arm valve system of the inner pivot layout, which proves advantageous in terms of the VVT (Variable Valve Timing) actuation performance of a variable valve timing mechanism.

Otherwise, Embodiment 3 is of the same construction and operation as Embodiment 2, so repetitive description will be omitted.

### [Embodiment 4]

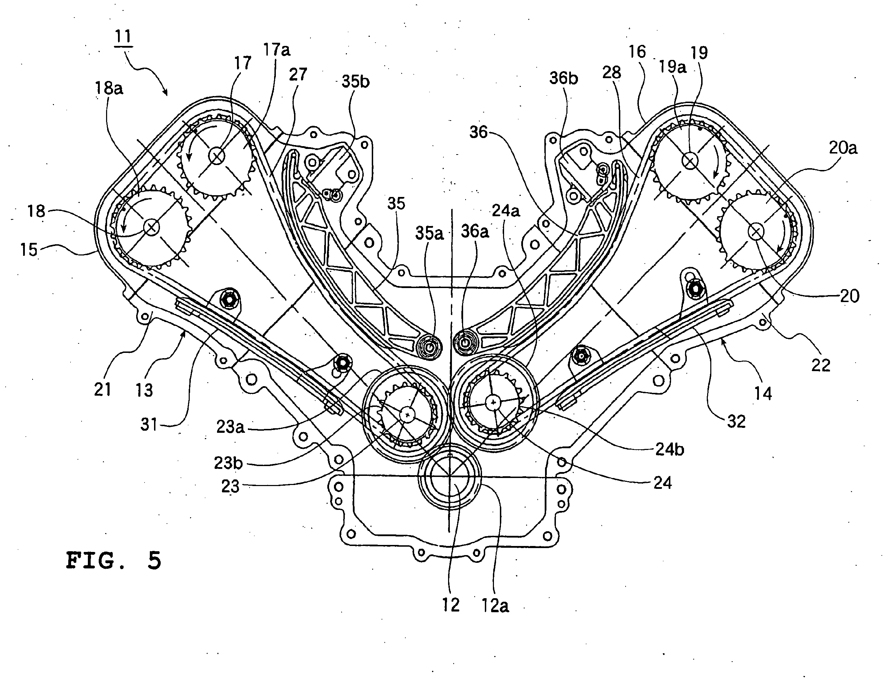

### Fig. 5 shows Embodiment 4.

In Embodiment 4, conversely to Embodiment 1, the first bank portion 13, the first valve camshafts 17 and 18, the first idle shaft 23, and the first timing drive chain 27 are provided on the left-hand side with respect to the center of the V-engine, and the second bank portion 14, the second valve camshafts 19 and 20, the second idle shaft 24, and the second timing drive chain 28 are provided on the right-hand side with respect to the center of the V-engine.

Further, the first and second guide portions 31 and 32 are provided on the outer sides of the band portions 13 and 14, and the first and second tensioners 35 and 36 are provided on the inner sides of the bank portions 13 and 14, respectively.

According to the construction as described above, the first and second tensioners 35 and 36 are both provided on the inner sides in the wide-angle V-engine 11, whereby the urging devices 35b and 36b and the like can be operated from above to achieve an improvement in operability.

Otherwise, Embodiment 4 is of the same construction and operation as Embodiment 1, so repetitive description will be omitted.

The description above discloses, in order to attain the above-mentioned objects, according to a first aspect, an internal combusting engine in which a plurality of cylinders are arranged in a V-shaped configuration by a first bank portion and a second bank portion, including: a first idle shaft driven by a crankshaft; and a second idle shaft driven by the first idle shaft. The first idle shaft is a shaft for driving a first valve camshaft of the first bank portion via a first endless timing drive belt, and the second idle shaft is a shaft for driving a second valve camshaft of the second bank portion via a second endless timing drive belt.

In the embodiment according to a second aspect, in addition to the structure as described in the first aspect, the crankshaft has a crank gear for driving the first idle shaft. The first idle shaft has a first idle gear driven by the crank gear, and a first drive wheel for driving the first valve camshaft, the first idle gear and the first drive wheel being coaxial with each other. The second idle shaft has a second idle gear driven by the first idle gear, and a second drive wheel for driving the second valve camshaft, the second idle gear and the second drive wheel being coaxial with each other. A gear ratio between the crank gear, the first idle gear, and the second idle gear is set so that the first idle shaft and the second idle shaft decelerate relative to the crankshaft.

In the embodiment according to a third aspect, in addition to the structure as described in the second aspect, the first idle gear and the second idle gear have the same number of teeth, and a gear ratio of the crank gear to the first idle gear is one of 1:2; 2:3, 3:4, 4:5, and 5:8.

In the embodiment according to a fourth aspect, in addition to the structure as described in any one of the first to third aspects, a center distance between the first idle shaft and the first valve camshaft is set smaller than a center distance between the crankshaft and the first valve camshaft, and a center distance between the second idle shaft and the second valve camshaft is set smaller than a center distance between the crankshaft and the second valve camshaft.

In the embodiment according to a fifth aspect, in addition to the structure as described in the second aspect, the second idle gear of the second idle shaft drives a balancer gear of a primary balancer shaft.

In the embodiment according to a sixth aspect, in addition to the structure as described in any one of the first to fifth aspects, a sum of a winding radius of the first endless timing drive belt on the first idle shaft and a winding radius of the second endless timing drive belt on the second idle shaft is smaller than a center distance between the first idle gear and the second idle gear.

In the embodiment according to a seventh aspect, in addition to the structure as described in any one of the first to sixth aspects, the internal combustion engine further includes a tensioner arranged on an outer or inner side of each of the first and second bank portions, for adjusting a tension applied to each of the first and second endless timing drive belts.

In the embodiment according to an eight aspect, in addition to the structure as described in any one of the first to seventh aspects, the first and second valve camshafts of the first and second bank portions each include a pair of intake and exhaust valve camshafts, valve gears that mesh with each other are provided to both of the intake and exhaust valve camshafts, and each of the first and second endless timing drive belts is wound around one of the intake and exhaust valve camshafts arranged on the outer or inner side of each of the first and second bank portions.

According to the embodiment according to the first aspect, the first and second endless timing drive belts are not directly driven by the crankshaft but are driven via the respective idle shafts. Accordingly, variations in crank angle speed are absorbed due to the intermeshing of the gears, whereby expansion or wear of the first and second endless timing drive belts can be prevented to thereby achieve improved durability of the first and second endless timing drive belts.

According to the embodiment according to the second aspect, since the rotation speed of the crank gear is decelerated via the respective idle gears, the outer shape of the driven sprocket (driven wheel) on the side of each valve camshaft can be made small. Accordingly, the spacing (cam-to-cam pitch) between the driven sprocket (driven wheel) on the intake valve camshaft side and the driven sprocket (driven wheel) on the exhaust valve camshaft side can be reduced, thereby making it possible to achieve miniaturization of the cylinder heads and cylinder covers.

Further, in addition to a drop in the rotation speed of each of the first and second drive wheels, the speed of each of the first and second endless timing drive belts also decreases, whereby an improvement can be achieved in terms of durability.

According to the embodiment according to the third aspect, the first idle gear and the second idle gear have the same number of teeth, and a gear ratio of the crank gear to the first idle gear is one of 1:2, 2:3, 3:4, 4:5, and 5:8. Accordingly, the cam-to-cam pitch can be made small without increasing the bending loss of the endless timing drive belts, thereby enabling miniaturization on the cylinder head side.

According to the embodiment according to the fourth aspect, a center distance between the first idle shaft and the first valve camshaft is set smaller than a center distance between the crankshaft and the first valve camshaft, and a center distance between the second idle shaft and the second valve camshaft is set smaller than a center distance between the crankshaft and the second valve camshaft. Accordingly, the overall length of each of the first and second endless timing drive belts can be reduced, whereby it is possible to prevent a decrease in performance due to expansion of the first and second endless timing drive belts, that is, a decrease in output due to a change in valve timing caused by the expansion of the first and second endless timing drive belts, a variation in exhaust gas compatibility, a deterioration of starting characteristics, or the like.

According to the embodiment according to the fifth aspect, when the primary balancer shaft is arranged, since the primary balancer shaft must be rotated in reverse with respect to the crankshaft, it can be brought into meshing engagement with either of the crank gear of the crankshaft and the second idle gear. Accordingly, the freedom of layout increases, and due to the adoption of the gear drive system, a phase shift can be made relatively small as compared with the case where a chain drive system is adopted.

According to the embodiment according to the sixth aspect, a sum of a winding radius of the first endless timing drive belt on the first idle shaft and a winding, radius of the second endless timing drive belt on the second idle shaft is smaller than a center distance between the first idle gear and the second idle gear. Therefore, since no interference occurs between the first and second endless timing drive belts of the two bank portions, there is no need to provide an offset in the direction of the crankshaft, thereby allowing a reduction in length with respect to the direction of the crankshaft.

According to the embodiment according to the seventh aspect, when a tensioner for adjusting a tension applied to each of the first and second endless timing drive belts is arranged on the outer side of each of the first and second V-shaped bank portions, a large, space can be secured on the inner side of the V-engine. Further, when the tensioner is arranged on the inner side of each of the first and second V-shaped bank portions, maintenance can be performed from above, thereby achieving an improvement in workability.

According to the embodiment according to the eight aspect, valve gears that mesh with each other are provided to each of the intake and exhaust valve camshafts, and each of the first and second endless timing drive belts is wound around one of the intake and exhaust valve camshafts arranged on the outer or inner side of each of the first and second bank portions. Accordingly, each of the valve camshafts on which the endless timing drive belt is not wound is driven by the valve gear, and the influence of the expansion of the endless timing drive belts between the camshafts is eliminated. Therefore, it is possible to prevent a decrease in performance due to the expansion of the first and second endless timing drive belts, that is, a decrease in output due to a change in valve timing caused by the expansion of the first and second endless timing drive belts, a variation in exhaust gas compatibility, a deterioration of starting characteristics, or the like.

Thus, the first aspect resides in an internal combusting engine in which a plurality of cylinders are arranged in a V-shaped configuration by a first bank portion and a second bank portion, comprising: a first idle shaft driven by a crankshaft; and a second idle shaft driven by the first idle shaft, wherein the first idle shaft is a shaft for driving a first valve camshaft of the first bank portion via a first endless timing drive belt, and the second idle shaft is a shaft for driving a second valve camshaft of the second bank portion via a second endless timing drive belt.

The second aspect resides in an internal combustion engine according to the first aspect, wherein: the crankshaft has a crank gear for driving the first idle shaft; the first idle shaft has a first idle gear driven by the crank gear, and a first drive wheel for driving the first valve camshaft, the first idle gear and the first drive wheel being coaxial with each other; the second idle shaft has a second idle gear driven by the first idle gear, and a second drive wheel for driving the second valve camshaft, the second idle gear and the second drive wheel being coaxial with each other; and a gear ratio between the crank gear, the first idle gear, and the second idle gear is set so that the first idle shaft and the second idle shaft decelerate relative to the crankshaft.

The third aspect resides in an internal combustion engine according to the second aspect, wherein the first idle gear and the second idle gear have the same number of teeth, and a gear ratio of the crank gear to the first idle gear is one of 1:2, 2:3, 3:4, 4:5; and 5:8.

The fourth aspect resides in an internal combustion engine according to any one of the first to third aspects, wherein: a center distance between the first idle shaft and the first valve camshaft is set smaller than a center distance between the crankshaft and the first valve camshaft; and a center distance between the second idle shaft and the second valve camshaft is set smaller than a center distance between the crankshaft and the second valve camshaft.

The fifth aspect resides in an internal combustion engine according to the second aspect, wherein the second idle gear of the second idle shaft drives a balancer gear of a primary balancer shaft.

The sixth aspect resides in an internal combustion engine according to any one of the first to fifth aspects, wherein a sum of a winding radius of the first endless timing drive belt on the first idle shaft and a winding radius of the second endless timing drive belt on the second idle shaft is smaller than a center distance between the first idle gear and the second idle gear.

The seventh aspect resides in an internal combustion engine according to any one of the first to sixth aspects, further comprising a tensioner arranged on an outer or inner side of each of the first and second bank portions, for adjusting a tension applied to each of the first and second endless timing drive belts.

The eight aspect resides in an internal combustion engine according to any one of the first to seventh aspects, wherein the first and second valve camshafts of the first and second bank portions each include a pair of intake and exhaust valve camshafts, valve gears that mesh with each other are provided to both of the intake and exhaust valve camshafts, and each of the first and second endless timing drive belts is wound around one of the intake and exhaust valve camshafts arranged on the outer or inner side of each of the first and second bank portions.

Accordingly, the description discloses a particularly preferred embodiment, in order to provide an internal combustion engine which reduces the influence of variations in crank angle speed to thereby achieve an improvement in the reliability and durability of an endless timing drive belt, which is an internal combusting engine 11 is formed in a V-shaped configuration by a first bank portion 13 and a second bank portion 14. The internal combusting engine 11 includes: a first idle shaft 23 driven by a crankshaft 12; and a second idle shaft 24 driven by the first idle shaft 23, in which the first idle shaft 23 is a shaft for driving first valve camshafts 17 and 18 of the first bank portion 13 via a first timing drive chain 27, and the second idle shaft 24 is a shaft for driving second valve camshafts 19 and 20 of the second bank portion 14 via a second endless timing drive chain 28.

## Claims

1. Internal combustion engine having first and second cylinder banks (13,14) in a V-shaped configuration and a valve-drive mechanism comprising a first idle shaft (23) driven by the crankshaft (12) for driving a valve camshaft (17,18) of the first cylinder bank (13) and a second idle shaft (24) driven by the first idle shaft (23) for driving a valve camshaft (19,20) of the second cylinder bank (14),
**characterized in that** a plurality of cylinders are arranged in the V-shaped configuration by the first cylinder bank (13) and the second cylinder bank (14), and the first idle shaft (23) is a shaft for driving the valve camshaft (17,18) of the first bank (13) via a first endless timing drive belt or chain, and the second idle shaft (24) is a shaft for driving the valve camshaft (19,20) of the second bank (14) via a second endless timing drive belt or chain.

2. Internal combustion engine according to claim 1, wherein the crankshaft (12) has a crank gear (12a) for driving the first idle shaft (23), the first idle shaft (23) has an idle gear (23a) driven by the crank gear (12a), and a drive wheel (23b) for driving the valve camshaft (17,18) of the first cylinder bank portion (13), the idle gear (23a) and the drive wheel (23b) of the first idle gear being arranged coaxial with each other, wherein the second idle shaft (24) has an idle gear (24a) driven by the idle gear (23a) of the first idle shaft, and a drive wheel (24b) for driving the valve camshaft of the second cylinder bank, the idle gear (24a) and the drive wheel (24b) of the second idle gear being arranged coaxial with each other, and wherein a gear ratio between the crank gear (12a), the idle gear (23a) of the first idle gear, and the idle gear (24a) of the second idle gear is set so that the first idle shaft (23) and the second idle shaft (24) decelerate relative to the crankshaft (12).

3. Internal combustion engine according to claim 2, wherein the idle gear (23a) of the first idle shaft and the idle gear (24a) of the second idle shaft have the same number of teeth, and a gear ratio of the crank gear (12a) to the idle gear (23a) of the first idle shaft is one of 1:2, 2:3, 3:4, 4:5, and 5:8.

4. Internal combustion engine according to one of the claims 1 to 3, wherein a center distance (L1) between the first idle shaft (23) and the valve camshaft of the first cylinder bank is set smaller than a center distance (L2) between the crankshaft (12) and the valve camshaft of the first cylinder bank, and a center distance (L3) between the second idle shaft (24) and the valve camshaft of the second cylinder bank is set smaller than a center distance (L4) between the crankshaft (12) and the valve camshaft of the second cylinder bank.

5. Internal combustion engine according to one of the claims 2 to 4, wherein the idle gear (24a) of the second idle shaft (24) drives a balancer gear (39a) of a primary balancer shaft (39).

6. Internal combustion engine according to one of the claims 1 to 5, wherein a sum of a winding radius (R1) of the first endless timing drive belt or chain on the first idle shaft (23) and a winding radius (R2) of the second endless timing drive belt or chain on the second idle shaft (24) is smaller than a center distance (L5) between the first idle gear (23a) and the second idle gear (24a).

7. Internal combustion engine according to one of the claims 1 to 6, further comprising a tensioner arranged on an outer or inner side of each of the first and second cylinder banks, for adjusting a tension applied to each of the first and second endless timing drive belts or chains.

8. Internal combustion engine according to one of the claims 1 to 7, wherein the valve camshafts of the first and second cylinder banks each include a pair of intake and exhaust valve camshafts, valve gears that mesh with each other are provided to both of the intake and exhaust valve camshafts, and each of the first and second endless timing drive belts is wound around one of the intake and exhaust valve camshafts arranged on the outer or inner side of each of the first and second cylinder banks.

## Patentansprüche

1. Brennkraftmaschine mit einer ersten und zweiten Zylinderbank (13, 14) in einer V-förmigen Konfiguration und einer Ventilantriebsvorrichtung, aufweisend eine erste Leerlaufwelle (23), angetrieben durch die Kurbelwelle (12) zum Antrieben einer Ventilnockenwelle (17, 18) der ersten Zylinderbank (13) und eine zweite Leerlaufwelle (24), angetrieben durch die erste Leerlaufwelle (23) zum Antreiben einer Ventilnockenwelle (19, 20) der zweiten Zylinderbank (14),
**dadurch gekennzeichnet, dass** eine Mehrzahl von Zylindern in der V- förmigen Konfiguration durch die erste Zylinderbank (13) und die zweite Zylinderbank (14) angeordnet ist und wobei die erste Leerlaufwelle (23) eine Welle zum Antreiben der Ventilnockenwelle (17, 18) der ersten Bank (13) über einen ersten endlosen Zeitgeber- Antriebszahnriemen oder -kette ist, und die zweite Leerlaufwelle (24) eine Welle zum Antreiben der Ventilnockenwelle (19, 20) der zweiten Bank (14) über einen zweiten endlosen Zeitgeber- Antriebszahnriemen oder -kette ist.

2. Brennkraftmaschine nach Anspruch 1, wobei die Kurbelwelle (12) ein Kurbelzahnrad (12a) zum Antreiben der ersten Leerlaufwelle (23) hat, die erste Leerlaufwelle (23) ein Leerlaufzahnrad (23a), angetrieben durch das Kurbelzahnrad (12a) und ein Antriebsrad (23b) zum Antreiben der Ventilnockenwelle (17, 18) des ersten Zylinderbankabschnittes (13) hat, wobei das Leerlaufzahnrad (23a) und das Antriebsrad (23b) der ersten Leerlaufwelle miteinander koaxial angeordnet sind, wobei die zweite Leerlaufwelle (24) ein Leerlaufzahnrad (24a), angetrieben durch das Leerlaufzahnrad (23a) der ersten Leerlaufwelle, und ein Antriebsrad (24b) zum Antreiben der Ventilnockenwelle der zweiten Zylinderbank hat, wobei das Leerlaufzahnrad (24a) und das Antriebsrad (24b) der zweiten Leerlaufwelle miteinander koaxial angeordnet sind und wobei ein Übersetzungsverhältnis zwischen dem Kurbelzahnrad (12a), dem Leerlaufzahnrad (23a) der ersten Leerlaufwelle und dem Leerlaufzahnrad (24a) der zweiten Leerlaufwelle so festgelegt ist, dass die erste Leerlaufwelle (23) und die zweite Leerlaufwelle (24) in Bezug auf die Kurbelwelle (12) abbremsen.

3. Brennkraftmaschine nach Anspruch 2, wobei das Leerlaufzahnrad (23a) der ersten Leerlaufwelle und das Leerlaufzahnrad (24a) der zweiten Leerlaufwelle die zweite Anzahl von Zähnen haben und ein Übersetzungsverhältnis des Kurbelzahnrades (12a) zu dem Leerlaufzahnrad (23a) der ersten Leerlaufwelle eines von 1:2, 2:3, 3:4, 4:5 oder 5:8 ist.

4. Brennkraftmaschine nach einem der Ansprüche 1 bis 3, wobei ein Achsabstand (L1) zwischen der ersten Leerlaufwelle (23) und der Ventilnockenwelle der ersten Zylinderbank kleiner als ein Achsabstand zwischen der Kurbelwelle (12) und der Ventilnockenwelle der ersten Zylinderbank festgelegt ist und ein Achsabstand (L3) zwischen der zweiten Leerlaufwelle (24) und der Ventilnockenwelle der zweiten Zylinderbank kleiner als ein Achsabstand (L4) zwischen der Kurbelwelle (12) und der Ventilnockenwelle der zweiten Zylinderbank festgelegt ist.

5. Brennkraftmaschine nach einem der Ansprüche 2 bis 4, wobei das Leerlaufzahnrad (24a) der zweiten Leerlaufwelle ein Ausgleichszahnrad (39a) einer Primär-Ausgleichswelle (39) hat.

6. Brennkraftmaschine nach einem der Ansprüche 1 bis 5, wobei eine Summe eines Windungsradius (R1) des ersten endlosen Zeitgeber- Antriebszahnriemens oder -kette auf der ersten Leerlaufwelle (23) und eines Windungsradius (R2) des zweiten Endlos- Antriebszahnriemens oder der -kette auf der zweiten Leerlaufwelle (24) kleiner als ein Achsabstand (L5) zwischen dem ersten Leerlaufzahnrad (23a) und dem zweiten Leerlaufzahnrad (24a) ist.

7. Brennkraftmaschine nach einem der Ansprüche 1 bis 6, außerdem aufweisend einen Spanner, angeordnet auf einer Außen- oder Innenseite jeder der ersten und zweiten Zylinderbänke zum Einstellen einer Spannung, aufgebracht auf jeden von dem ersten und zweiten endlosen Zeitgeber- Antriebszahnriemen oder -kette.

8. Brennkraftmaschine nach einem der Ansprüche 1 bis 7, wobei die Ventilnockenwellen der ersten und zweiten Zylinderbänke jeweils ein Paar von Einlass- und Auslass- Ventilnockenwellen enthalten, wobei Ventilzahnräder, die miteinander im Kämmeingriff sind, an sowohl den Einlass-, als auch den Auslass- Ventilnockenwellen vorgesehen sind und jeder von dem ersten und zweiten endlosen Zeitgeber- Antriebszahnriemen um eine der Einlass- und Auslass- Ventilnockenwellen, angeordnet auf der Außenseite oder Innenseite von jeder der ersten und zweiten Zylinderbank, geschlungen ist.

## Revendications

1. Moteur à combustion interne possédant des première et seconde rangées de cylindres (13, 14) dans une configuration en V, ainsi qu'un mécanisme d'entraînement de soupapes comprenant un premier arbre fou (23) entraîné par le vilebrequin (12) afin d'entraîner un arbre à cames de soupapes (17, 18) de la première rangée de cylindres (13) et un second arbre fou (24) entraîné par le premier arbre fou (23) afin de piloter un arbre à cames de soupapes (19, 20) de la seconde rangée de cylindres (14),
**caractérisé en ce qu'**une pluralité de cylindres est disposée dans la configuration en V par la première rangée de cylindres (13) et la seconde rangée de cylindres (14), et le premier arbre fou (23) est un arbre destiné à entraîner l'arbre à cames des soupapes (17, 18) de la première rangée (13) par l'intermédiaire d'une première courroie ou chaîne d'entraînement sans fin, et le second arbre fou (24) est un arbre destiné à entraîner l'arbre à cames des soupapes (19, 20) de la seconde rangée (14) par l'intermédiaire d'une seconde courroie ou chaîne d'entraînement sans fin.

2. Moteur à combustion interne selon la revendication 1, dans lequel le vilebrequin (12) possède une transmission à bielle (12a) destinée à entraîner le premier arbre fou (23), le premier arbre fou (23) possède une roue folle (23a) entraînée par la transmission à bielle (12a) et un volant d'entraînement (23b) destiné à entraîner l'arbre à cames des soupapes (17, 18) de la première partie de rangée de cylindres (13), la poulie folle (23a) et le volant d'entraînement (23b) de la première poulie folle étant disposés coaxialement l'un à l'autre, dans lequel le second arbre fou (24) possède une roue folle (24a) entraînée par la roue folle (23a) du premier arbre fou et un volant d'entraînement (24b) destiné à entraîner l'arbre à cames des soupapes de la seconde rangée de cylindres, la roue folle (24a) et le volant d'entraînement (24b) de le second arbre fou étant disposés coaxialement l'un à l'autre, et dans lequel le rapport de vitesse entre la transmission à bielle (12a), la roue folle (23a) de le premier arbre fou, et la roue folle (24a) de le second arbre fou est établi de telle sorte que le premier arbre fou (23) et le second arbre fou (24) décélèrent par rapport au vilebrequin (12).

3. Moteur à combustion interne selon la revendication 2, dans lequel la roue folle (23a) du premier arbre fou et la roue folle (24a) du second arbre fou possèdent le même nombre de dents et le rapport de vitesse de la commande à bielle (12a) sur la roue folle (23a) du premier arbre fou est un de 1 : 2, 2 : 3, 3 : 4, 4 : 5 et 5 : 8.

4. Moteur à combustion interne selon l'une des revendications 1 à 3, dans lequel la distance centrale (L1) entre le premier arbre fou (23) et l'arbre à cames des soupapes de la première rangée de cylindres est établie pour être plus petite que la distance centrale (L2) entre le vilebrequin (12) et l'arbre à cames des soupapes de la première rangée de cylindres, et la distance centrale (L3) entre le second arbre fou (24) et l'arbre à cames des soupapes de la seconde rangée de cylindres est établie pour est plus petite que la distance centrale (L4) entre le vilebrequin (12) et l'arbre à cames des soupapes de la seconde rangée de cylindres.

5. Moteur à combustion interne selon l'une des revendications 2 à 4, dans lequel la roue folle (24a) du second arbre fou (24) entraîne un pignon d'équilibrage (39a) appartenant à un arbre d'équilibrage principal (39).

6. Moteur à combustion interne selon l'une des revendications 1 à 5, dans lequel la somme du rayon d'enroulement (R1) de la première courroie ou chaîne d'entraînement sans fin sur l'arbre fou (23), et du rayon d'enroulement (R2) de la seconde courroie ou chaîne d'entraînement sans fin sur le second arbre fou (24) est plus petite que la distance centrale (L5) entre la première roue folle (23a) et la seconde roue folle (24a).

7. Moteur à combustion interne selon l'une des revendications 1 à 6, comprenant en outre un dispositif de mise sous tension agencé sur le côté externe ou interne de chacune des première et seconde rangées de cylindres afin d'ajuster la tension appliquée à chacune des première et seconde courroie ou chaînes d'entraînement sans fin.

8. Moteur à combustion interne selon l'une des revendications 1 à 7, dans lequel les arbres à cames des soupapes des première et seconde rangées de cylindres incluent chacun une paire d'arbres à came des soupapes d'admission et d'échappement, des pignons de soupapes qui s'engrènent l'un avec l'autre sont prévus à la fois sur les arbres à cames des soupapes d'admission et d'échappement et chacune des première et seconde courroies d'entraînement sans fin est enroulée autour de l'un des arbres à cames des soupapes d'admission et d'échappement agencés sur le côté externe ou interne de chacune des première et seconde rangées de cylindres.
